# EUROPEAN PATENT APPLICATION

(11) **EP 4 664 245 A1**
(43) Date of publication of application: **17.12.2025**
(21) Application number: 24201879.4
(22) Date of filing: 23.09.2024
(51) Int. Cl.: G06F 3/01, G06F 3/03, G06F 3/16

(54) **INFORMATION PROCESSING SYSTEM, PROGRAM, AND INFORMATION PROCESSING METHOD**

(30) Priority: 11.06.2024 JP 2024094679
(71) Applicant: FUJIFILM Business Innovation Corp., Minato-ku Tokyo (JP)
(72) Inventor: IKEDA, Nanaka, Ebina-shi, Kanagawa (JP); SASAKI, Hirotake, Ebina-shi, Kanagawa (JP); MAEKAWA, Shinichi, Yokohama-shi, Kanagawa (JP); TAKEUCHI, Ko, Yokohama-shi, Kanagawa (JP); SUDO, Masami, Yokohama-shi, Kanagawa (JP); NIMIYA, Hiroshi, Yokohama-shi, Kanagawa (JP); YOSHIDA, Arisa, Yokohama-shi, Kanagawa (JP); EGAWA, Satoshi, Yokohama-shi, Kanagawa (JP); USAMI, Yukiko, Yokohama-shi, Kanagawa (JP)
(74) Representative: Kurig, Thomas

(57) **Abstract**

An information processing system includes one or plural processors configured to acquire a speech image including a speaking person, acquire a supplementary image for supplementing spoken content of the speaking person, the supplementary image being based on the spoken content and not being a text directly representing the spoken content, and perform a control of displaying the supplementary image at a two-dimensional position in the speech image corresponding to a three-dimensional position at which a target to be supplemented is present in the speech image.

## Description

### BACKGROUND OF THE INVENTION

### (i) Field of the Invention

The present invention relates to an information processing system, a program, and an information processing method.

### (ii) Description of Related Art

JP2019-535059A discloses a sensory eyewear system that can recognize and interpret sign language and present translated information to a user of a mixed reality device.

JP1995-191599A discloses a video apparatus including a sign language image generation unit that converts semantic content recognized by a voice recognition unit into an animation image of sign language, and a display unit that displays image information generated by the sign language image generation unit on a screen.

JP2020-077187A discloses an augmented reality system in which an augmented reality terminal operates in a first mode for generating virtual information and a second mode for presenting an augmented reality image and includes a positional information acquisition portion that acquires positional information of the augmented reality terminal, a virtual information generation unit that generates the virtual information based on input information of a user, a transmission unit that transmits the generated virtual information and the positional information at the time of generation to an information processing apparatus in association with each other, a reception unit that receives the virtual information from the information processing apparatus based on the positional information in the second mode, a virtual image generation unit that generates an image of a floating object based on the virtual information, and an augmented reality image display control portion that controls display of the augmented reality image.

### SUMMARY OF THE INVENTION

A supplementary image for supplementing spoken content of a speaking person in a speech image including the speaking person may be displayed. In this case, adopting a configuration of displaying the supplementary image at a two-dimensional position in the speech image without considering a three-dimensional position at which a target to be supplemented is present in the speech image is considered. However, adopting such a configuration results in a probability of being unable to intuitively recognize which target to be supplemented is supplemented by the supplementary image.

An object of the present invention is to increase a probability of being able to intuitively recognize which target to be supplemented is supplemented by a supplementary image for supplementing spoken content of a speaking person.

According to a first aspect of the present disclosure, there is provided an information processing system including one or a plurality of processors configured to acquire a speech image including a speaking person, acquire a supplementary image for supplementing spoken content of the speaking person, the supplementary image being based on the spoken content and not being a text directly representing the spoken content, and perform a control of displaying the supplementary image at a two-dimensional position in the speech image corresponding to a three-dimensional position at which a target to be supplemented is present in the speech image.

According to a second aspect of the present disclosure, in the information processing system according to the first aspect, the target to be supplemented may be the speaking person, and the supplementary image may be a sign language image representing sign language based on the spoken content.

According to a third aspect of the present disclosure, in the information processing system according to the second aspect, the sign language image may be a video obtained by imaging a sign language operation performed by a sign language interpreter based on the spoken content.

According to a fourth aspect of the present disclosure, in the information processing system according to the second aspect, the sign language image may be a video of a sign language operation generated from the spoken content without requiring a sign language operation performed by a sign language interpreter based on the spoken content.

According to a fifth aspect of the present disclosure, in the information processing system according to the second aspect, the sign language image may be a video of a sign language operation performed by a virtual person generated from a sign language operation performed by a sign language interpreter based on the spoken content.

According to a sixth aspect of the present disclosure, in the information processing system according to any one of the second to fifth aspects, the two-dimensional position in the speech image may be a position at which a hand of the speaking person is displayed in the speech image.

According to a seventh aspect of the present disclosure, in the information processing system according to any one of the first to sixth aspects, the target to be supplemented may be an object included in the spoken content, and the supplementary image may be a description image representing description of the object included in the spoken content.

According to an eighth aspect of the present disclosure, in the information processing system according to the seventh aspect, the description image may be an image that demonstrates the object and that is generated based on a demonstrative word demonstrating the object included in the spoken content.

According to a ninth aspect of the present disclosure, in the information processing system according to the seventh aspect, the description image may be an image that represents a state of the object and that is generated based on a stative word representing the state of the object included in the spoken content.

According to a tenth aspect of the present disclosure, in the information processing system according to any one of the seventh to ninth aspects, the two-dimensional position in the speech image may be a position within a predetermined range around the target to be supplemented in the speech image.

According to an eleventh aspect of the present disclosure, there is provided a program causing a computer to implement a function of acquiring a speech image including a speaking person, a function of acquiring a supplementary image for supplementing spoken content of the speaking person, the supplementary image being based on the spoken content and not being a text directly representing the spoken content, and a function of performing a control of displaying the supplementary image at a two-dimensional position in the speech image corresponding to a three-dimensional position at which a target to be supplemented is present in the speech image.

According to a twelfth aspect of the present disclosure, there is provided an information processing method including acquiring a speech image including a speaking person, acquiring a supplementary image for supplementing spoken content of the speaking person, the supplementary image being based on the spoken content and not being a text directly representing the spoken content, and performing a control of displaying the supplementary image at a two-dimensional position in the speech image corresponding to a three-dimensional position at which a target to be supplemented is present in the speech image.

According to the first aspect of the present disclosure, a probability of being able to intuitively recognize which target to be supplemented is supplemented by the supplementary image for supplementing the spoken content of the speaking person is increased.

According to the second aspect of the present disclosure, a probability of being able to intuitively recognize which speaking person of the spoken content is supplemented by the sign language image is increased.

According to the third aspect of the present disclosure, the sign language image can be displayed even in a case where a function of generating the video of the sign language operation performed by the virtual person from the sign language operation performed by the sign language interpreter is not provided.

According to the fourth aspect of the present disclosure, the sign language image can be displayed even in a case where the sign language interpreter does not actually perform the sign language operation based on the spoken content.

According to the fifth aspect of the present disclosure, the sign language image can be displayed without psychologically burdening the sign language interpreter by using the video of the sign language operation performed by the sign language interpreter.

According to the sixth aspect of the present disclosure, the speaking person can be seen as though the speaking person is performing the sign language operation even in a case where the speaking person does not actually perform the sign language operation.

According to the seventh aspect of the present disclosure, a probability of being able to intuitively recognize which object included in the spoken content of the speaking person is supplemented by the description image is increased.

According to the eighth aspect of the present disclosure, a probability of being able to intuitively recognize which object is supplemented by the description image is further increased.

According to the ninth aspect of the present disclosure, a probability of being able to intuitively recognize which state of the object is represented by the description image is increased.

According to the tenth aspect of the present disclosure, a relationship between the description image and the object can be easily seen.

According to the eleventh aspect of the present disclosure, a probability of being able to intuitively recognize which target to be supplemented is supplemented by the supplementary image for supplementing the spoken content of the speaking person is increased.

According to the twelfth aspect of the present disclosure, the probability of being able to intuitively recognize which target to be supplemented is supplemented by the supplementary image for supplementing the spoken content of the speaking person is increased.

### BRIEF DESCRIPTION OF THE DRAWINGS

Exemplary embodiment(s) of the present invention will be described in detail based on the following figures, wherein:
Fig. 1 is a diagram illustrating an overall configuration example of an AR system in the present exemplary embodiment;
Fig. 2 is a diagram illustrating a hardware configuration example of AR glasses in the present exemplary embodiment;
Fig. 3 is a diagram illustrating a conceptual configuration example of an AR module in the present exemplary embodiment;
Fig. 4 is a diagram illustrating a hardware configuration example of an AR server in the present exemplary embodiment;
Fig. 5 is a diagram illustrating a schematic operation of the AR system of a first aspect;
Fig. 6 is a diagram illustrating a schematic operation of the AR system of a second aspect;
Fig. 7 is a diagram illustrating a schematic operation of the AR system of a third aspect;
Fig. 8 is a diagram illustrating a schematic operation of the AR system of a fourth aspect;
Fig. 9 is a diagram illustrating a schematic operation of the AR system of a fifth aspect;
Fig. 10 is a block diagram illustrating a functional configuration example of the AR server in the present exemplary embodiment;
Fig. 11 is a flowchart illustrating an operation example of the AR server in the AR system of the first aspect;
Fig. 12 is a flowchart illustrating an operation example of the AR server in the AR system of the second aspect;
Fig. 13 is a flowchart illustrating an operation example of the AR server in the AR system of the third aspect;
Fig. 14 is a flowchart illustrating an operation example of the AR server in the AR system of the fourth aspect; and
Fig. 15 is a flowchart illustrating an operation example of the AR server in the AR system of the fifth aspect.

### DETAILED DESCRIPTION OF THE INVENTION

Hereinafter, the present exemplary embodiment will be described in detail with reference to the accompanying drawings.

### (Summary of Present Exemplary Embodiment)

The present exemplary embodiment provides an information processing system that acquires a speech image including a speaking person, acquires a supplementary image for supplementing spoken content of the speaking person, the supplementary image being based on the spoken content and not being a text directly representing the spoken content, and performs a control of displaying the supplementary image at a two-dimensional position in the speech image corresponding to a three-dimensional position at which a target to be supplemented is present in the speech image.

The "system" may be configured with a single apparatus or may be configured with a plurality of apparatuses. Hereinafter, an information processing system configured with a single apparatus will be illustrated. An augmented reality (AR) server in an AR system will be illustratively described as the single apparatus.

### (Overall Configuration of AR System)

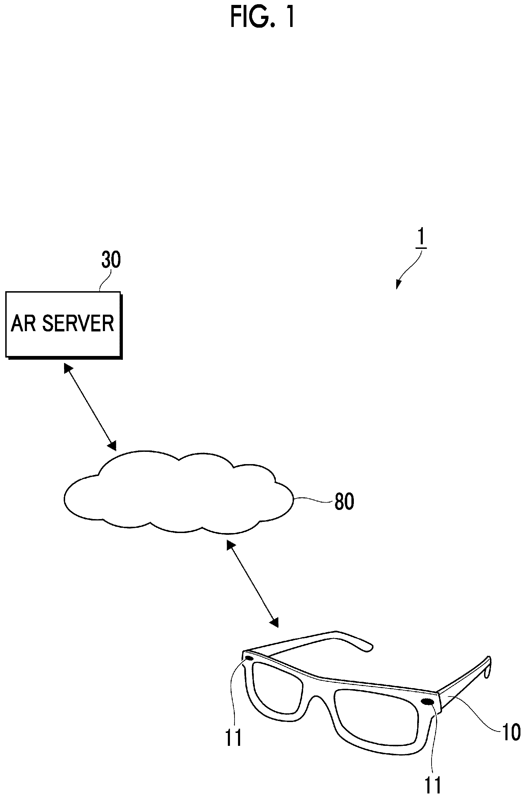

Fig. 1 is a diagram illustrating an overall configuration example of an AR system 1 in the present exemplary embodiment. As illustrated, the AR system 1 includes AR glasses 10, an AR server 30, and a communication line 80. While only one AR glasses 10 are illustrated, there may be a plurality of AR glasses 10.

The AR glasses 10 are an eyewear-type wearable terminal apparatus. The term "wearable" means being wearable by a user. Thus, the eyewear-type wearable terminal apparatus is a computer apparatus actually wearable by the user on a head portion in the form of eyewear.

The AR glasses 10 are an apparatus that implements AR display to the user. The term "AR" is "Augmented Reality" and refers to display of a virtual screen to the user in a superimposed manner on a real space. That is, the user can visually recognize the virtual screen via the AR glasses 10 and can also visually recognize the real space through the AR glasses 10. In this case, the "virtual screen" is an image that is created by a computer and that can be visually recognized using the AR glasses 10. The "real space" is an actual existing space.

Two cameras 11 are attached to both ends of a front part of a frame of the AR glasses 10. While an image of the augmented reality (hereinafter, referred to as an "AR image") is assumed to be a two-dimensional image in the present exemplary embodiment, the AR image may be a three-dimensional image. The three-dimensional image refers to an image in which information about a distance is recorded for each pixel, and is referred to as a "distance image". For example, a stereo camera may be used as the cameras 11 in acquiring the three-dimensional image. Alternatively, light detection and ranging (LiDAR) may be used for acquiring the three-dimensional image.

While the AR glasses 10 are illustrated as the eyewear-type apparatus, the present invention is not limited to this. Apparatuses of any shapes or types may be used as long as the apparatuses display AR. Specifically, an optical transmissive display may be used in a broader sense. For example, mixed reality (MR) glasses may be used instead of the AR glasses.

The AR server 30 is a server computer that performs processing for displaying information on the AR glasses 10. Specifically, information to be displayed on the AR glasses 10 is generated, and the information is output to a microdisplay 122 (described later) of the AR glasses 10.

The communication line 80 is a line used for information communication between the AR glasses 10 and the AR server 30. For example, a wireless local area network (LAN) or the internet may be used as the communication line 80. Alternatively, for example, a mobile communication system such as 4G or 5G or Bluetooth (registered trademark) may be used as the communication line 80.

### (Hardware Configuration of AR Glasses)

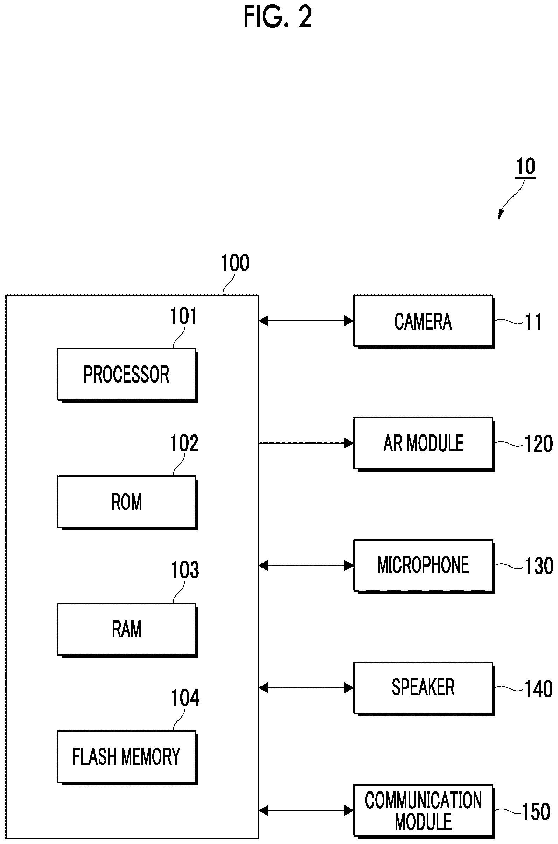

Fig. 2 is a diagram illustrating a hardware configuration example of the AR glasses 10 in the present exemplary embodiment. As illustrated, the AR glasses 10 include a data processing portion 100. The AR glasses 10 further include the camera 11, an AR module 120, a microphone 130, and a speaker 140. The AR glasses 10 further include a communication module 150.

The data processing portion 100 includes a processor 101. The data processing portion 100 further includes a read only memory (ROM) 102 and a random access memory (RAM) 103. The data processing portion 100 further includes a flash memory 104.

For example, the processor 101 is configured with a central processing unit (CPU). The processor 101 implements various functions through execution of a program.

All of the ROM 102, the RAM 103, and the flash memory 104 are semiconductor memories. The ROM 102 stores a basic input output system (BIOS) and the like. The RAM 103 is a main storage device used for executing the program. For example, a dynamic RAM (DRAM) is used as the RAM 103.

The flash memory 104 is used for recording firmware, the program, a data file, and the like. The flash memory 104 is used as an auxiliary storage device.

The camera 11 images a space ahead of a field of view of the user. An angle of view of the camera 11 may be substantially the same as an angle of view of a person or greater than or equal to the angle of view of a person. For example, a CMOS image sensor or a CCD image sensor is used as the camera 11. There may be a single camera 11 or a plurality of cameras 11. In the example in Fig. 1, there are two cameras 11. In this case, for example, the two cameras 11 may be disposed at both ends of the front part of the frame. Stereo imaging can be performed using the two cameras 11. A distance to a subject can be measured, or a foreground-background relationship between subjects can be estimated.

The AR module 120 is a module that implements visual recognition of the augmented reality in which real scenery is combined with the AR image. The AR module 120 is configured with an optical component and an electronic component.

Representative methods of the AR module 120 include the following methods. A first method is disposing a half mirror ahead of an eye of the user. A second method is disposing a volume hologram ahead of the eye of the user. A third method is disposing a blazed diffraction grating ahead of the eye of the user.

The microphone 130 is a device that converts voice of the user or ambient sound into an electrical signal.

The speaker 140 is a device that converts an electrical signal into sound and outputs the sound. The speaker 140 may be a bone conduction speaker or a cartilage conduction speaker.

The speaker 140 may be a device independent of the AR glasses 10, such as a wireless earphone. In this case, the speaker 140 is connected to the AR glasses 10 using Bluetooth (registered trademark) or the like.

The communication module 150 is a device complying with a protocol used for communication through the communication line 80. The communication module 150 may also be a device complying with a protocol used for communication with other external apparatuses. Examples of the protocol used for communication with the external apparatuses include Wi-Fi (registered trademark) and Bluetooth (registered trademark).

While illustration is not provided, the AR glasses 10 may be additionally provided with an inertial sensor, a positioning sensor, an oscillator, and the like.

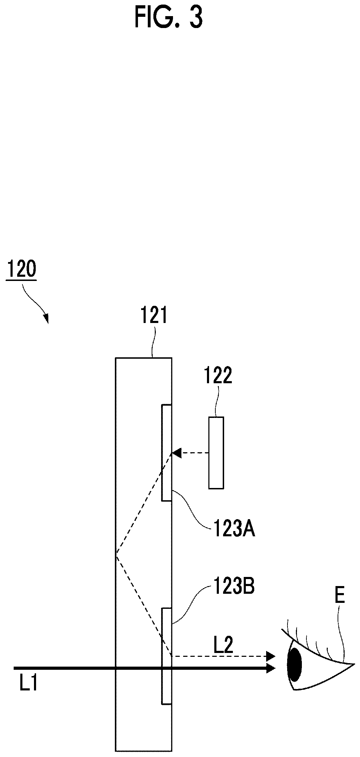

Fig. 3 is a diagram illustrating a conceptual configuration example of the AR module 120 in the present exemplary embodiment. The AR module 120 illustrated in Fig. 3 corresponds to the method of disposing the blazed diffraction grating ahead of the eye of the user.

The AR module 120 illustrated in Fig. 3 includes a light guide plate 121 and the microdisplay 122. The AR module 120 illustrated in Fig. 3 also includes a diffraction grating 123A into which video light L2 is input. The AR module 120 illustrated in Fig. 3 further includes a diffraction grating 123B from which the video light L2 is output.

The light guide plate 121 corresponds to lenses of eyewear. For example, the light guide plate 121 has transmittance of 85% or more. Thus, the user can directly visually recognize the scenery ahead through the light guide plate 121. Extraneous light L1 travels straight through the light guide plate 121 and the diffraction grating 123B to be incident on an eye E of the user.

The microdisplay 122 is a display device on which the AR image to be visually recognized by the user is displayed. Light of the AR image displayed on the microdisplay 122 is projected to the light guide plate 121 as the video light L2. The video light L2 is refracted by the diffraction grating 123A and reaches the diffraction grating 123B while being reflected in the light guide plate 121. The diffraction grating 123B refracts the video light L2 in a direction of the eye E of the user.

Accordingly, the extraneous light L1 and the video light L2 are incident on the eye E of the user at the same time. Consequently, the user recognizes the presence of the AR image ahead in a line of sight of the user.

### (Hardware Configuration of AR Server)

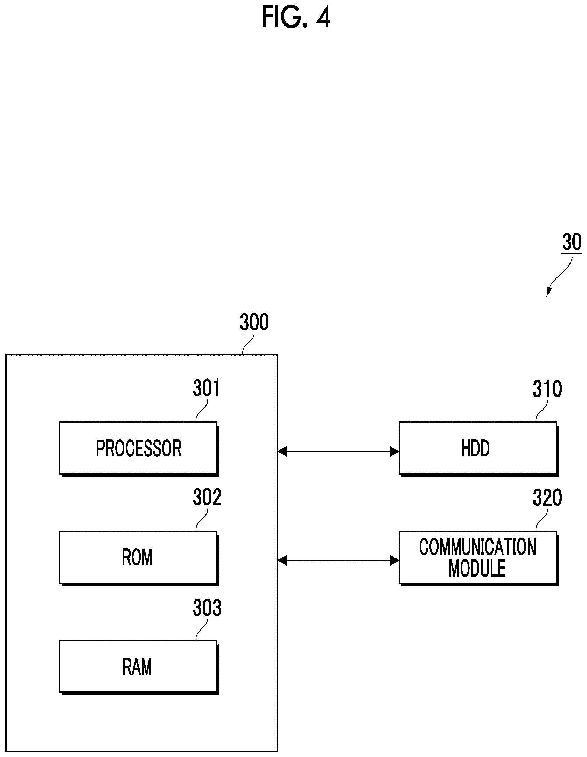

Fig. 4 is a diagram illustrating a hardware configuration example of the AR server 30 in the present exemplary embodiment. As illustrated, the AR server 30 includes a data processing portion 300. The AR server 30 further includes a hard disk drive (HDD) 310 and a communication module 320.

The data processing portion 300 includes a processor 301. The data processing portion 300 further includes a ROM 302 and a RAM 303.

For example, the processor 301 is configured with a CPU. The processor 301 implements various functions through execution of a program.

Both of the ROM 302 and the RAM 303 are semiconductor memories. The ROM 302 stores a BIOS and the like. The RAM 303 is used as a main storage device used for executing the program. For example, a DRAM is used as the RAM 303.

The HDD 310 is an auxiliary storage device using a magnetic disk as a recording medium. In the present exemplary embodiment, the HDD 310 is used as the auxiliary storage device. Alternatively, a non-volatile rewritable semiconductor memory may be used as the auxiliary storage device. An operating system or an application program is installed in the HDD 310.

The communication module 320 is a device complying with a protocol used for communication through the communication line 80.

While illustration is not provided, the AR server 30 may be additionally provided with a display, a keyboard, a mouse, and the like.

### (Schematic Operation of AR System)

### ((First Aspect))

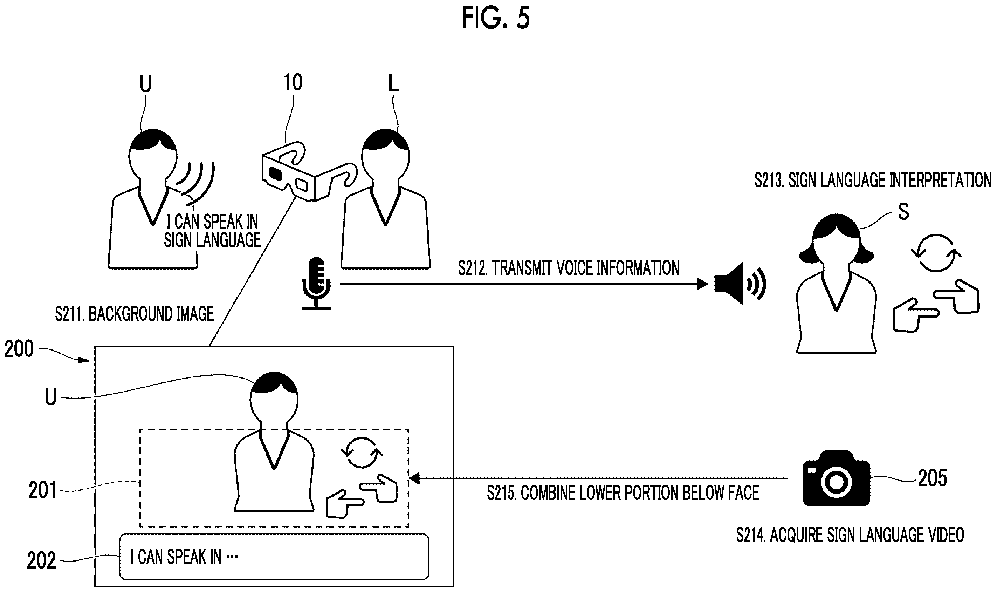

Fig. 5 is a diagram illustrating a schematic operation of the AR system 1 of a first aspect.

Fig. 5 assumes that a speaking person U is speaking and a listening person L wearing the AR glasses 10 is listening to the speaking.

A background image 200 including the speaking person U is seen from the AR glasses 10 (step S211). Voice information of the speaking of the speaking person U is transmitted to a sign language interpreter S (step S212). Then, the sign language interpreter S performs sign language interpretation in real time based on the transmitted voice information (step S213). At this point, a camera 205 acquires a sign language video by imaging an operation of the sign language interpreter S (step S214). Accordingly, a lower portion of the background image 200 below a face of the speaking person U is combined with a lower portion of the sign language video below a face as a sign language image 201 (step S215). In this case, the sign language image 201 is combined as though the sign language interpretation is being performed at a three-dimensional position of the speaking person U. The background image 200 may be further combined with text information 202 obtained by performing voice recognition on the voice information of the speaking of the speaking person U.

### ((Second Aspect))

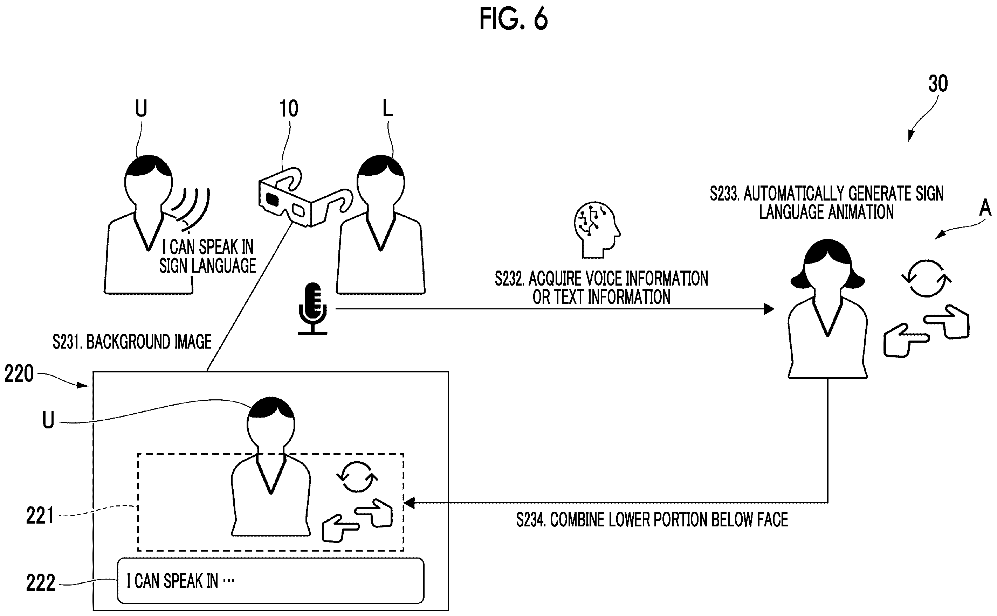

Fig. 6 is a diagram illustrating a schematic operation of the AR system 1 of a second aspect.

Fig. 6 also assumes that the speaking person U is speaking and the listening person L wearing the AR glasses 10 is listening to the speaking.

A background image 220 including the speaking person U is seen from the AR glasses 10 (step S231). The AR server 30 acquires the voice information of the speaking of the speaking person U or acquires the text information by performing the voice recognition on the voice information (step S232). Then, the AR server 30 automatically generates a sign language animation A based on the voice information or on the text information (step S233). Accordingly, a lower portion of the background image 220 below the face of the speaking person U is combined with a lower portion of the sign language animation A below a face as a sign language image 221 (step S234). In this case, the sign language image 221 is combined as though the sign language interpretation is being performed at the three-dimensional position of the speaking person U. The background image 220 may be further combined with text information 222 obtained by performing the voice recognition on the voice information of the speaking of the speaking person U.

### ((Third Aspect))

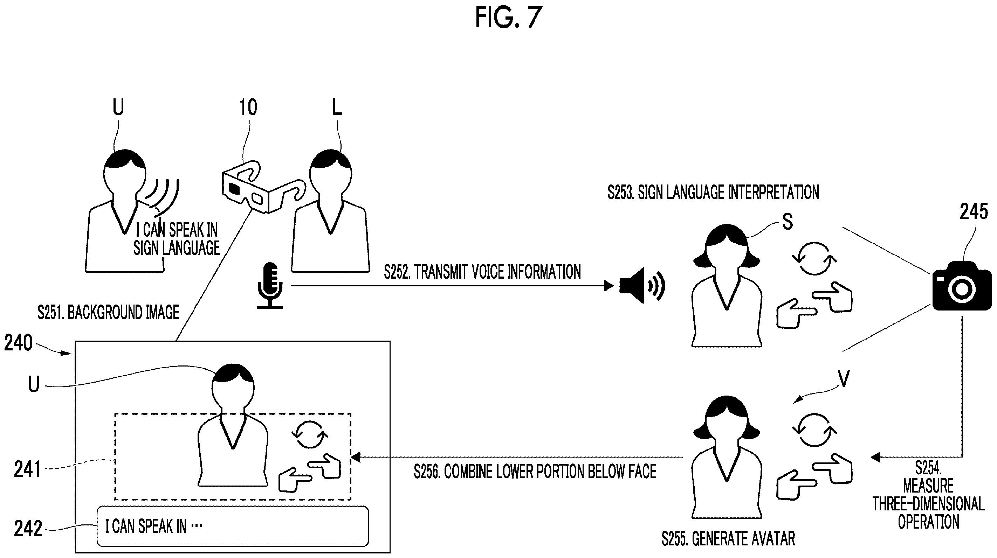

Fig. 7 is a diagram illustrating a schematic operation of the AR system 1 of a third aspect.

Fig. 7 also assumes that the speaking person U is speaking and the listening person L wearing the AR glasses 10 is listening to the speaking.

A background image 240 including the speaking person U is seen from the AR glasses 10 (step S251). The voice information of the speaking of the speaking person U is transmitted to the sign language interpreter S (step S252). Then, the sign language interpreter S performs the sign language interpretation in real time based on the transmitted voice information (step S253). At this point, a camera 245 measures a three-dimensional operation of the sign language interpreter S (step S254). An avatar V reflecting the three-dimensional operation is generated (step S255). Accordingly, a lower portion of the background image 240 below the face of the speaking person U is combined with a lower portion of the avatar V below a face as a sign language image 241. In this case, the sign language image 241 is combined as though the sign language interpretation is being performed at the three-dimensional position of the speaking person U. The background image 240 may be further combined with text information 242 obtained by performing the voice recognition on the voice information of the speaking of the speaking person U.

### ((Fourth Aspect))

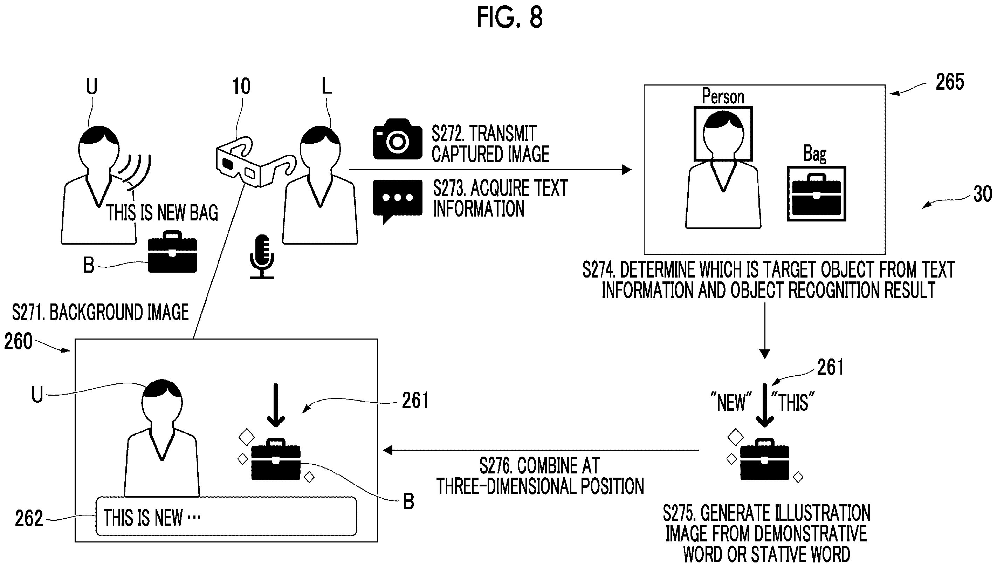

Fig. 8 is a diagram illustrating a schematic operation of the AR system 1 of a fourth aspect.

Fig. 8 assumes that the speaking person U is speaking about a bag B and the listening person L wearing the AR glasses 10 is listening to the speaking.

A background image 260 including the speaking person U and the bag B is seen from the AR glasses 10 (step S271). The AR glasses 10 transmit a captured image 265 corresponding to the background image 260 to the AR server 30 (step S272). The AR server 30 acquires the voice information of the speaking of the speaking person U and acquires the text information by performing the voice recognition on the voice information (step S273).

Then, the AR server 30 acquires the noun "bag" appearing in the speaking from the acquired text information. The AR server 30 also detects a demonstrative word and a stative word related to the noun from the text information. For example, the demonstrative word is a word such as "this" that demonstrates an object represented by the noun. For example, the stative word is a word such as "new" that represents a state of the object represented by the noun. The AR server 30 further recognizes the object from the captured image 265 and specifies the object represented by the noun acquired from the text information. That is, the AR server 30 determines which object is represented by the noun based on the text information and on an object recognition result (step S274).

Then, the AR server 30 generates a description image 261 based on the demonstrative word and the stative word acquired from the text information (step S275). The description image 261 is an illustration image in which demonstration represented by the demonstrative word and the state represented by the stative word are drawn as an illustration. Accordingly, the background image 260 is combined with the description image 261 near the bag B (step S276). In this case, the description image 261 is combined as though the description image 261 is near a three-dimensional position of the bag B. The background image 260 may be further combined with text information 262 obtained by performing the voice recognition on the voice information of the speaking of the speaking person U.

### ((Fifth Aspect))

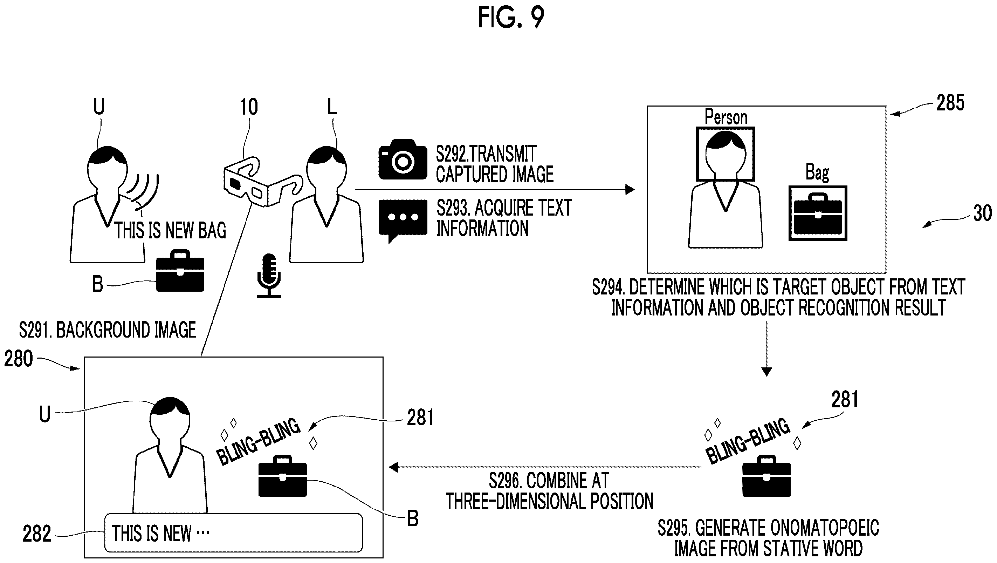

Fig. 9 is a diagram illustrating a schematic operation of the AR system 1 of a fifth aspect.

Fig. 9 also assumes that the speaking person U is speaking about the bag B and the listening person L wearing the AR glasses 10 is listening to the speaking.

A background image 280 including the speaking person U and the bag B is seen from the AR glasses 10 (step S291). The AR glasses 10 transmit a captured image 285 corresponding to the background image 280 to the AR server 30 (step S292). The AR server 30 acquires the voice information of the speaking of the speaking person U and acquires the text information by performing the voice recognition on the voice information (step S293).

Then, the AR server 30 acquires the noun "bag" appearing in the speaking from the acquired text information. The AR server 30 also detects the stative word related to the noun from the text information. As described above, the stative word is a word representing the state of the object represented by the noun. The AR server 30 further recognizes the object from the captured image 285 and specifies the object represented by the noun acquired from the text information. That is, the AR server 30 determines which object is represented by the noun based on the text information and on the object recognition result (step S294).

Then, the AR server 30 generates a description image 281 based on the stative word acquired from the text information (step S295). The description image 281 is an onomatopoeic image in which the state represented by the stative word is represented using onomatopoeia. Accordingly, the background image 280 is combined with the description image 281 near the bag B (step S296). In this case, the description image 281 is combined as though the description image 281 is near the three-dimensional position of the bag B. The background image 280 may be further combined with text information 282 obtained by performing the voice recognition on the voice information of the speaking of the speaking person U.

### (Functional Configuration of AR Server)

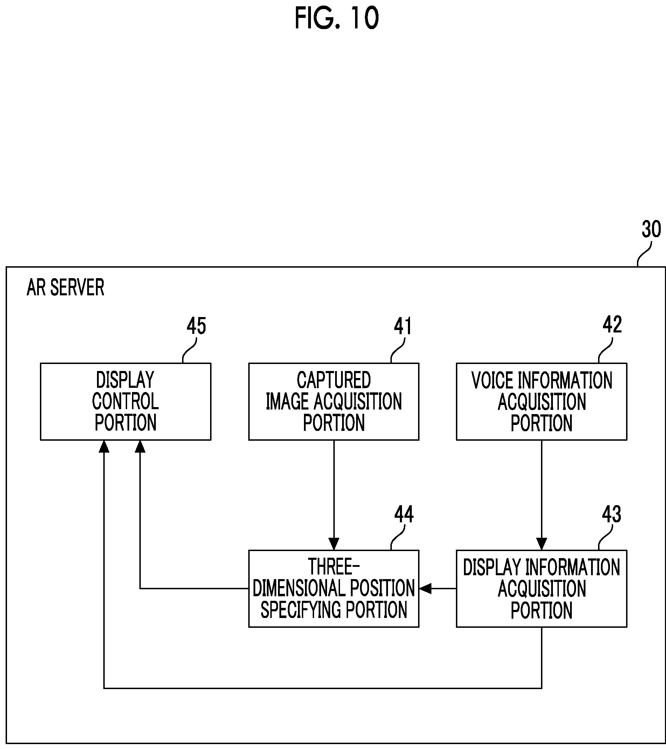

Fig. 10 is a block diagram illustrating a functional configuration example of the AR server 30 in the present exemplary embodiment. As illustrated, the AR server 30 includes a captured image acquisition portion 41, a voice information acquisition portion 42, and a display information acquisition portion 43. The AR server 30 further includes a three-dimensional position specifying portion 44 and a display control portion 45.

The captured image acquisition portion 41 acquires the captured image including the speaking person captured by the camera 11 of the AR glasses 10. Alternatively, the captured image acquisition portion 41 may acquire a captured image including the speaking person captured by a camera provided outside the AR glasses 10.

In the first to third aspects, the captured image acquisition portion 41 acquires the captured image including the speaking person U. In this case, the captured image including the speaking person U is an example of the speech image including the speaking person. The processing of the captured image acquisition portion 41 is an example of acquisition of the speech image.

In the fourth and fifth aspects, the captured image acquisition portion 41 acquires the captured image including the speaking person U and the bag B. In this case, the captured image including the speaking person U and the bag B is an example of the speech image including the speaking person. The processing of the captured image acquisition portion 41 is an example of acquisition of the speech image.

The voice information acquisition portion 42 acquires the voice information including the voice of the speaking person collected by the microphone 130 of the AR glasses 10. Alternatively, the voice information acquisition portion 42 may acquire voice information including the voice of the speaking person collected by a microphone provided outside the AR glasses 10.

The display information acquisition portion 43 acquires display information for displaying the spoken content of the speaking person based on the voice information acquired by the voice information acquisition portion 42. The display information may be the supplementary image for supplementing the spoken content of the speaking person. The supplementary image is assumed not to directly represent the spoken content of the speaking person as a text. For example, the supplementary image is assumed not to be a voice recognition result of the spoken content of the speaking person. In this case, the processing of the display information acquisition portion 43 is an example of acquisition of the supplementary image for supplementing the spoken content of the speaking person, the supplementary image being based on the spoken content and not being the text directly representing the spoken content.

In the first to third aspects, the display information acquisition portion 43 acquires the sign language image representing the spoken content of the speaking person in sign language as the display information. In this case, the processing of the display information acquisition portion 43 is an example of acquisition of the sign language image representing sign language based on the spoken content.

Particularly, in the first aspect, the display information acquisition portion 43 transmits the voice information acquired by the voice information acquisition portion 42 to the sign language interpreter. Accordingly, the sign language interpreter performs the sign language interpretation in real time. The camera 205 (refer to Fig. 5) images the operation of the sign language interpreter and transmits the video. Accordingly, the display information acquisition portion 43 receives the video. In this case, the processing of the display information acquisition portion 43 is an example of acquisition of the video obtained by imaging the sign language operation performed by the sign language interpreter based on the spoken content.

In the second aspect, the display information acquisition portion 43 generates the sign language animation based on the voice information acquired by the voice information acquisition portion 42. In this case, the display information acquisition portion 43 automatically generates the sign language animation not based on the operation of the sign language interpretation performed by the sign language interpreter. For example, the display information acquisition portion 43 may automatically generate the sign language animation using the method according to JP1995-191599A. In this case, the processing of the display information acquisition portion 43 is an example of acquisition of the video of the sign language operation generated from the spoken content without requiring the sign language operation performed by the sign language interpreter based on the spoken content.

In the third aspect, the display information acquisition portion 43 transmits the voice information acquired by the voice information acquisition portion 42 to the sign language interpreter. Accordingly, the sign language interpreter performs the sign language interpretation in real time. The camera 245 (refer to Fig. 7) measures the operation of the sign language interpreter and transmits a measurement result. Accordingly, the display information acquisition portion 43 receives the measurement result. The display information acquisition portion 43 generates the avatar reflecting the operation of the sign language interpreter based on the measurement result. In this case, the processing of the display information acquisition portion 43 is an example of acquisition of the video of the sign language operation performed by a virtual person generated from the sign language operation performed by the sign language interpreter based on the spoken content.

In the fourth and fifth aspects, the display information acquisition portion 43 acquires the description image for describing the object as the display information. The object is included in the spoken content of the speaking person. Alternatively, the object may also be included in the captured image acquired by the captured image acquisition portion 41. In this case, the processing of the display information acquisition portion 43 is an example of acquisition of the description image representing description of the object included in the spoken content.

Specifically, for example, the display information acquisition portion 43 may acquire an image demonstrating the object as the description image. For example, the display information acquisition portion 43 may generate the image demonstrating the object based on the demonstrative word included in the spoken content of the speaking person. In this case, the processing of the display information acquisition portion 43 is an example of acquisition of the image that demonstrates the object and that is generated based on the demonstrative word demonstrating the object included in the spoken content.

For example, the display information acquisition portion 43 also acquires an image representing the state of the object as the description image. For example, the display information acquisition portion 43 may generate the image representing the state of the object based on the stative word included in the spoken content of the speaking person. In this case, the processing of the display information acquisition portion 43 is an example of acquisition of the image that represents the state of the object and that is generated based on the stative word representing the state of the object included in the spoken content.

Particularly, in the fourth aspect, the display information acquisition portion 43 extracts the noun from the voice information acquired by the voice information acquisition portion 42. The display information acquisition portion 43 extracts the demonstrative word and the stative word related to the noun from the voice information acquired by the voice information acquisition portion 42. Accordingly, the display information acquisition portion 43 generates the illustration image based on the demonstrative word and the stative word as the description image.

In the second aspect, the display information acquisition portion 43 extracts the noun from the voice information acquired by the voice information acquisition portion 42. The display information acquisition portion 43 extracts the stative word related to the noun from the voice information acquired by the voice information acquisition portion 42. Accordingly, the display information acquisition portion 43 generates the onomatopoeic image based on the stative word as the description image.

The three-dimensional position specifying portion 44 specifies a three-dimensional position of the object included in the captured image acquired by the captured image acquisition portion 41. The three-dimensional position specifying portion 44 calculates a distance to the object using a stereo camera as the camera 11 of the AR glasses 10.

In the first to third aspects, the three-dimensional position specifying portion 44 specifies the three-dimensional position of the speaking person U included in the captured image. The three-dimensional position specifying portion 44 calculates a distance from the AR glasses 10 to the speaking person U.

In the fourth and fifth aspects, the three-dimensional position specifying portion 44 recognizes the object represented by the noun acquired from the captured image as the display information. The three-dimensional position specifying portion 44 also specifies the three-dimensional position of the object included in the captured image. The three-dimensional position specifying portion 44 calculates a distance from the AR glasses 10 to the object.

The display control portion 45 performs a control of displaying the display information acquired by the display information acquisition portion 43 on the AR glasses 10. The display control portion 45 displays the display information to be present at the three-dimensional position of the object specified by the three-dimensional position specifying portion 44. For example, the display control portion 45 performs a control of displaying the display information at a two-dimensional position corresponding to the three-dimensional position of the object. The two-dimensional position may be a two-dimensional position on the background image seen from the AR glasses 10. In a case where the distance to the object is long, the display control portion 45 may display the display information in a small size in accordance with the distance. In a case where the distance to the object is short, the display control portion 45 may display the display information in a large size in accordance with the distance. In this case, the processing of the display control portion 45 is an example of a control of displaying the supplementary image at the two-dimensional position in the speech image corresponding to the three-dimensional position at which the target to be supplemented is present in the speech image.

In the first to third aspects, the display control portion 45 displays the sign language image such that the sign language image is present at the three-dimensional position of the speaking person U. For example, the display control portion 45 performs a control of displaying the sign language image at a two-dimensional position corresponding to a three-dimensional position of a hand of the speaking person U. In a case where the distance to the speaking person U is long, the display control portion 45 may display the sign language image in a small size in accordance with the distance. In a case where the distance to the speaking person U is short, the display control portion 45 may display the sign language image in a large size in accordance with the distance. In this case, the processing of the display control portion 45 is an example of a control of displaying the supplementary image at the two-dimensional position in the speech image corresponding to the three-dimensional position at which the speaking person is present in the speech image. The processing of the display control portion 45 is also an example of a control of displaying the supplementary image at a position at which the hand of the speaking person is displayed in the speech image.

In the fourth and fifth aspects, the display control portion 45 displays the description image such that the description image is present at the three-dimensional position of the object appearing in the speaking of the speaking person U. For example, the display control portion 45 performs a control of displaying the description image at the two-dimensional position corresponding to the three-dimensional position of the object. In a case where the distance to the object is long, the display control portion 45 may display the description image in a small size in accordance with the distance. In a case where the distance to the object is short, the display control portion 45 may display the description image in a large size in accordance with the distance. In this case, the processing of the display control portion 45 is an example of a control of displaying the supplementary image at the two-dimensional position in the speech image corresponding to the three-dimensional position at which the object included in the spoken content is present in the speech image. The processing of the display control portion 45 is also an example of a control of displaying the supplementary image at a position within a predetermined range around the target to be supplemented in the speech image.

### (Operation of AR Server)

### ((First Aspect))

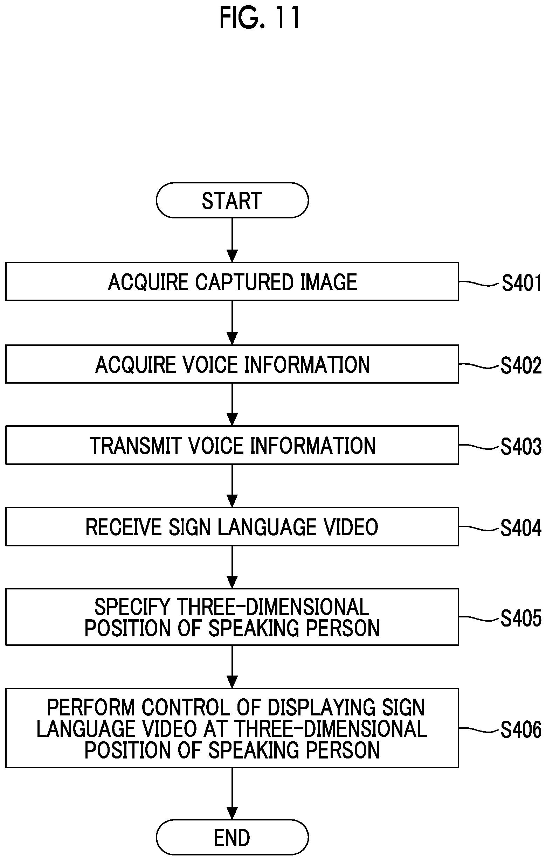

Fig. 11 is a flowchart illustrating an operation example of the AR server 30 in the AR system 1 of the first aspect.

As illustrated, first, the captured image acquisition portion 41 acquires the captured image including the speaking person from the AR glasses 10 (step S401).

Next, the voice information acquisition portion 42 acquires the voice information including the voice of the speaking person from the AR glasses 10 (step S402).

Next, the display information acquisition portion 43 transmits the voice information to the sign language interpreter (step S403). Then, the sign language interpreter performs the sign language operation based on the voice information, and the camera 205 (refer to Fig. 5) acquires the sign language video. Accordingly, the display information acquisition portion 43 receives the sign language video from the camera 205 (step S404).

Next, the three-dimensional position specifying portion 44 specifies the three-dimensional position of the speaking person based on the captured image (step S405).

Then, the display control portion 45 controls the AR glasses 10 to display the sign language video at the three-dimensional position of the speaking person (step S406). Specifically, the display control portion 45 performs a control of displaying the lower portion of the sign language video below the face at a three-dimensional position in a lower portion of the speaking person below the face. Accordingly, in the AR glasses 10, the sign language video is seen as though the speaking person is speaking in sign language.

### ((Second Aspect))

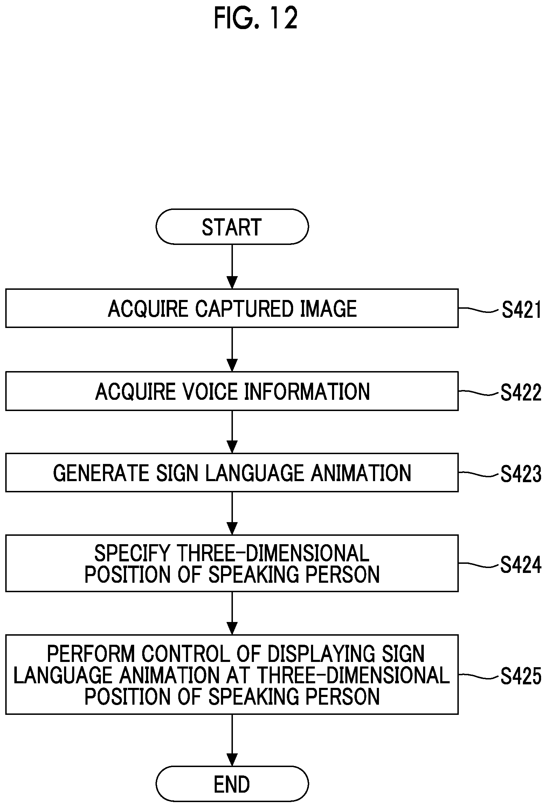

Fig. 12 is a flowchart illustrating an operation example of the AR server 30 in the AR system 1 of the second aspect.

As illustrated, first, the captured image acquisition portion 41 acquires the captured image including the speaking person from the AR glasses 10 (step S421).

Next, the voice information acquisition portion 42 acquires the voice information including the voice of the speaking person from the AR glasses 10 (step S422).

Next, the display information acquisition portion 43 generates the sign language animation based on the voice information (step S423).

Next, the three-dimensional position specifying portion 44 specifies the three-dimensional position of the speaking person based on the captured image (step S424).

Then, the display control portion 45 controls the AR glasses 10 to display the sign language animation at the three-dimensional position of the speaking person (step S425). Specifically, the display control portion 45 performs a control of displaying the lower portion of the sign language animation below the face at the three-dimensional position in the lower portion of the speaking person below the face. Accordingly, in the AR glasses 10, the sign language animation is seen as though the speaking person is speaking in sign language.

### ((Third Aspect))

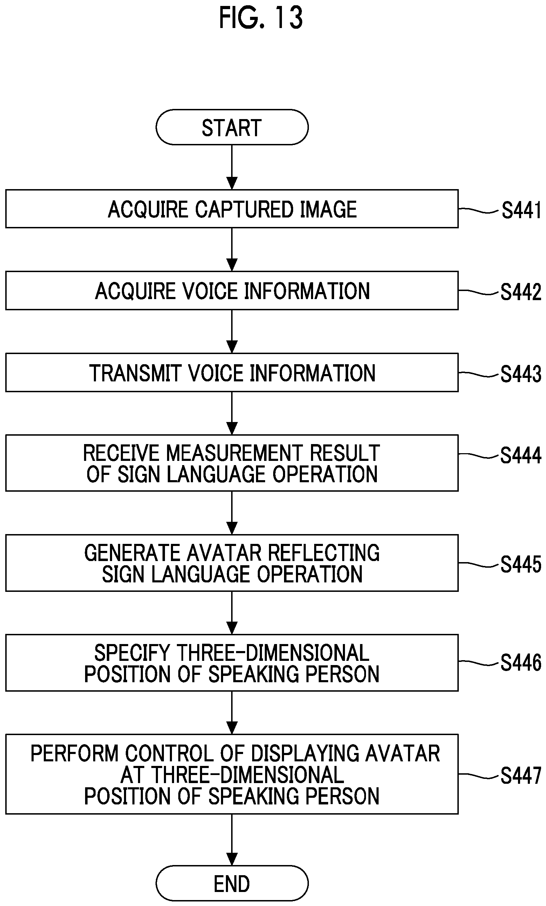

Fig. 13 is a flowchart illustrating an operation example of the AR server 30 in the AR system 1 of the third aspect.

As illustrated, first, the captured image acquisition portion 41 acquires the captured image including the speaking person from the AR glasses 10 (step S441).

Next, the voice information acquisition portion 42 acquires the voice information including the voice of the speaking person from the AR glasses 10 (step S442).

Next, the display information acquisition portion 43 transmits the voice information to the sign language interpreter (step S443). Then, the sign language interpreter performs the sign language operation based on the voice information, and the camera 245 (refer to Fig. 7) measures the sign language operation. Accordingly, the display information acquisition portion 43 receives the measurement result of the sign language operation from the camera 245 (step S444). The display information acquisition portion 43 generates the avatar reflecting the sign language operation based on the measurement result (step S445).

Next, the three-dimensional position specifying portion 44 specifies the three-dimensional position of the speaking person based on the captured image (step S446).

Then, the display control portion 45 controls the AR glasses 10 to display the avatar at the three-dimensional position of the speaking person (step S447). Specifically, the display control portion 45 performs a control of displaying the lower portion of the avatar below the face at the three-dimensional position in the lower portion of the speaking person below the face. Accordingly, in the AR glasses 10, the avatar is seen as though the speaking person is speaking in sign language.

### ((Fourth Aspect))

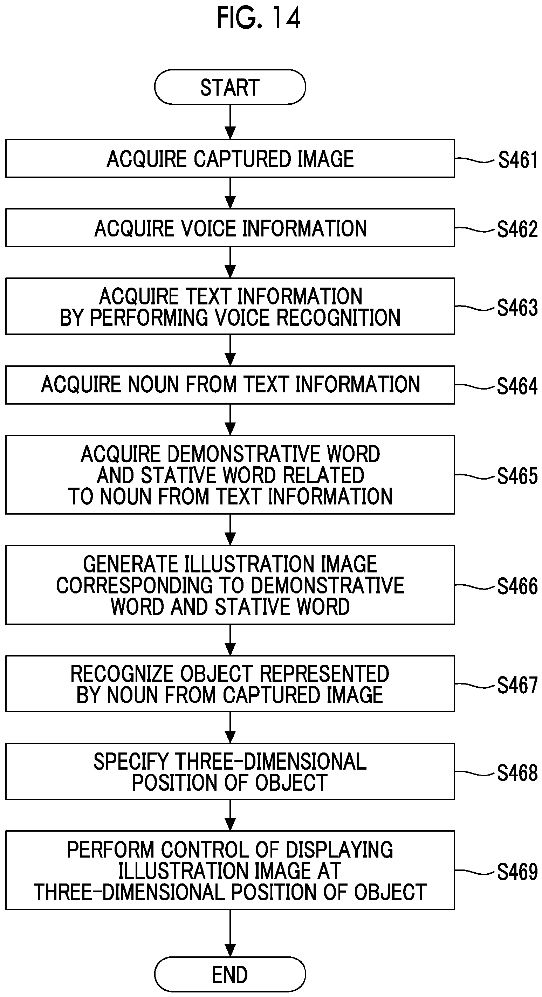

Fig. 14 is a flowchart illustrating an operation example of the AR server 30 in the AR system 1 of the fourth aspect.

As illustrated, first, the captured image acquisition portion 41 acquires the captured image including the speaking person from the AR glasses 10 (step S461).

Next, the voice information acquisition portion 42 acquires the voice information including the voice of the speaking person from the AR glasses 10 (step S462).

Next, the display information acquisition portion 43 acquires the text information by performing the voice recognition on the voice information (step S463). The display information acquisition portion 43 also acquires the noun from the text information (step S464). The display information acquisition portion 43 further acquires the demonstrative word and the stative word related to the noun from the text information (step S465). Accordingly, the display information acquisition portion 43 generates the illustration image corresponding to the demonstrative word and the stative word (step S466).

Next, the three-dimensional position specifying portion 44 recognizes the object represented by the noun acquired in step S464 from the captured image (step S467). The three-dimensional position specifying portion 44 also specifies the three-dimensional position of the object (step S468).

Then, the display control portion 45 controls the AR glasses 10 to display the illustration image at the three-dimensional position of the object (step S469). Specifically, the display control portion 45 performs a control of displaying the illustration image at a three-dimensional position around the object. Accordingly, in the AR glasses 10, the illustration image is seen as though the illustration image is present at the position of the object.

### ((Fifth Aspect))

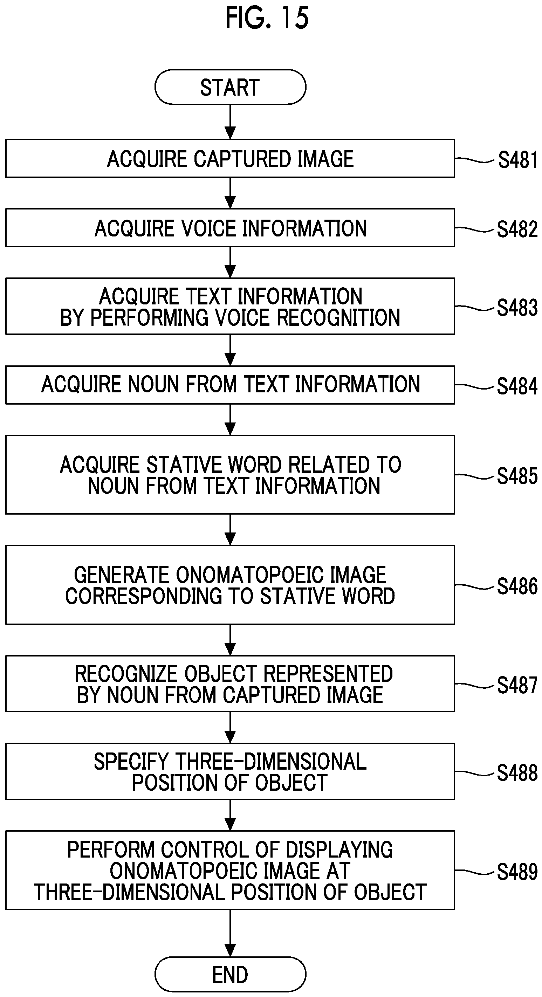

Fig. 15 is a flowchart illustrating an operation example of the AR server 30 in the AR system 1 of the fifth aspect.

As illustrated, first, the captured image acquisition portion 41 acquires the captured image including the speaking person from the AR glasses 10 (step S481).

Next, the voice information acquisition portion 42 acquires the voice information including the voice of the speaking person from the AR glasses 10 (step S482).

Next, the display information acquisition portion 43 acquires the text information by performing the voice recognition on the voice information (step S483). The display information acquisition portion 43 also acquires the noun from the text information (step S484). The display information acquisition portion 43 further acquires the stative word related to the noun from the text information (step S485). Accordingly, the display information acquisition portion 43 generates the onomatopoeic image corresponding to the stative word (step S486).

Next, the three-dimensional position specifying portion 44 recognizes the object represented by the noun acquired in step S484 from the captured image (step S487). The three-dimensional position specifying portion 44 also specifies the three-dimensional position of the object (step S488).

Then, the display control portion 45 controls the AR glasses 10 to display the onomatopoeic image at the three-dimensional position of the object (step S489). Specifically, the display control portion 45 performs a control of displaying the onomatopoeic image at the three-dimensional position around the object. Accordingly, in the AR glasses 10, the onomatopoeic image is seen as though the onomatopoeic image is present at the position of the obj ect.

### (Processor)

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### (Program)

The present exemplary embodiment can be applied to a program and a program product. For example, the program to which the present exemplary embodiment is applied is conceived as a program causing a computer to implement a function of acquiring the speech image including the speaking person, a function of acquiring the supplementary image for supplementing the spoken content of the speaking person, the supplementary image being based on the spoken content and not being the text directly representing the spoken content, and a function of performing a control of displaying the supplementary image at the two-dimensional position in the speech image corresponding to the three-dimensional position at which the target to be supplemented is present in the speech image.

The program to which the present exemplary embodiment is applied can be not only provided by communication means but also provided by storing the program in a recording medium such as a CD-ROM.

### (Supplementary Note)

(((1))) An information processing system comprising:
   one or a plurality of processors configured to:
   acquire a speech image including a speaking person;
   acquire a supplementary image for supplementing spoken content of the speaking person, the supplementary image being based on the spoken content and not being a text directly representing the spoken content; and
   perform a control of displaying the supplementary image at a two-dimensional position in the speech image corresponding to a three-dimensional position at which a target to be supplemented is present in the speech image.
(((2))) The information processing system according to (((1))),
   wherein the target to be supplemented is the speaking person, and
   the supplementary image is a sign language image representing sign language based on the spoken content.
(((3))) The information processing system according to (((2))),
   wherein the sign language image is a video obtained by imaging a sign language operation performed by a sign language interpreter based on the spoken content.
(((4))) The information processing system according to (((2))),
   wherein the sign language image is a video of a sign language operation generated from the spoken content without requiring a sign language operation performed by a sign language interpreter based on the spoken content.
(((5))) The information processing system according to (((2))),
   wherein the sign language image is a video of a sign language operation performed by a virtual person generated from a sign language operation performed by a sign language interpreter based on the spoken content.
(((6))) The information processing system according to any one of (((2))) to (((5))),
   wherein the two-dimensional position in the speech image is a position at which a hand of the speaking person is displayed in the speech image.
(((7))) The information processing system according to any one of (((1))) to (((6)))),
   wherein the target to be supplemented is an object included in the spoken content, and the supplementary image is a description image representing description of the object included in the spoken content.
(((8))) The information processing system according to (((7))),
   wherein the description image is an image that demonstrates the object and that is generated based on a demonstrative word demonstrating the object included in the spoken content.
(((9))) The information processing system according to (((7))),
   wherein the description image is an image that represents a state of the object and that is generated based on a stative word representing the state of the object included in the spoken content.
(((10))) The information processing system according to any one of (((7))) to (((9))),
   wherein the two-dimensional position in the speech image is a position within a predetermined range around the target to be supplemented in the speech image.
(((11))) A program causing a computer to implement:
   a function of acquiring a speech image including a speaking person;
   a function of acquiring a supplementary image for supplementing spoken content of the speaking person, the supplementary image being based on the spoken content and not being a text directly representing the spoken content; and
   a function of performing a control of displaying the supplementary image at a two-dimensional position in the speech image corresponding to a three-dimensional position at which a target to be supplemented is present in the speech image.

According to (((1))), a probability of being able to intuitively recognize which target to be supplemented is supplemented by the supplementary image for supplementing the spoken content of the speaking person is increased.

According to (((2))), a probability of being able to intuitively recognize which speaking person of the spoken content is supplemented by the sign language image is increased.

According to (((3))), the sign language image can be displayed even in a case where a function of generating the video of the sign language operation performed by the virtual person from the sign language operation performed by the sign language interpreter is not provided.

According to (((4))), the sign language image can be displayed even in a case where the sign language interpreter does not actually perform the sign language operation based on the spoken content.

According to (((5))), the sign language image can be displayed without psychologically burdening the sign language interpreter by using the video of the sign language operation performed by the sign language interpreter.

According to (((6))), the speaking person can be seen as though the speaking person is performing the sign language operation even in a case where the speaking person does not actually perform the sign language operation.

According to (((7))), a probability of being able to intuitively recognize which object included in the spoken content of the speaking person is supplemented by the description image is increased.

According to (((8))), a probability of being able to intuitively recognize which object is supplemented by the description image is further increased.

According to (((9))), a probability of being able to intuitively recognize which state of the object is represented by the description image is increased.

According to (((10))), a relationship between the description image and the object can be easily seen.

According to (((11))), a probability of being able to intuitively recognize which target to be supplemented is supplemented by the supplementary image for supplementing the spoken content of the speaking person is increased.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: AR system
10: AR glasses
30: AR server
41: captured image acquisition portion
42: voice information acquisition portion
43: display information acquisition portion
44: three-dimensional position specifying portion
45: display control portion

## Claims

1. An information processing system comprising:
one or a plurality of processors configured to:
acquire a speech image including a speaking person;
acquire a supplementary image for supplementing spoken content of the speaking person, the supplementary image being based on the spoken content and not being a text directly representing the spoken content; and
perform a control of displaying the supplementary image at a two-dimensional position in the speech image corresponding to a three-dimensional position at which a target to be supplemented is present in the speech image.

2. The information processing system according to claim 1,
wherein the target to be supplemented is the speaking person, and
the supplementary image is a sign language image representing sign language based on the spoken content.

3. The information processing system according to claim 2,
wherein the sign language image is a video obtained by imaging a sign language operation performed by a sign language interpreter based on the spoken content.

4. The information processing system according to claim 2,
wherein the sign language image is a video of a sign language operation generated from the spoken content without requiring a sign language operation performed by a sign language interpreter based on the spoken content.

5. The information processing system according to claim 2,
wherein the sign language image is a video of a sign language operation performed by a virtual person generated from a sign language operation performed by a sign language interpreter based on the spoken content.

6. The information processing system according to any one of claims 2 to 5,
wherein the two-dimensional position in the speech image is a position at which a hand of the speaking person is displayed in the speech image.

7. The information processing system according to any one of claims 1 to 6,
wherein the target to be supplemented is an object included in the spoken content, and
the supplementary image is a description image representing description of the object included in the spoken content.

8. The information processing system according to claim 7,
wherein the description image is an image that demonstrates the object and that is generated based on a demonstrative word demonstrating the object included in the spoken content.

9. The information processing system according to claim 7,
wherein the description image is an image that represents a state of the object and that is generated based on a stative word representing the state of the object included in the spoken content.

10. The information processing system according to any one of claims 7 to 9,
wherein the two-dimensional position in the speech image is a position within a predetermined range around the target to be supplemented in the speech image.

11. A program causing a computer to implement:
a function of acquiring a speech image including a speaking person;
a function of acquiring a supplementary image for supplementing spoken content of the speaking person, the supplementary image being based on the spoken content and not being a text directly representing the spoken content; and
a function of performing a control of displaying the supplementary image at a two-dimensional position in the speech image corresponding to a three-dimensional position at which a target to be supplemented is present in the speech image.

12. An information processing method comprising:
acquiring a speech image including a speaking person;
acquiring a supplementary image for supplementing spoken content of the speaking person, the supplementary image being based on the spoken content and not being a text directly representing the spoken content; and
performing a control of displaying the supplementary image at a two-dimensional position in the speech image corresponding to a three-dimensional position at which a target to be supplemented is present in the speech image.
